# EUROPEAN PATENT APPLICATION

(11) **EP 4 626 003 A1**
(43) Date of publication of application: **01.10.2025**
(21) Application number: 24305453.3
(22) Date of filing: 26.03.2024
(51) Int. Cl.: H04N 21/44, H04N 21/84

(54) **GRAPH BASED METHOD TO HANDLE RENDERING QUALITIES**

(71) Applicant: InterDigital CE Patent Holdings, SAS, 75017 Paris (FR)
(72) Inventor: HIRTZLIN, Patrice, 35830 BETTON (FR); LELIEVRE, Sylvain, 35760 MONTGERMONT (FR); FAIVRE D'ARCIER, Etienne, 35750 SAINT GONLAY (FR); JOUET, Pierrick, 35000 RENNES (FR); FONTAINE, Loic, 35530 NOYAL SUR VILAINE (FR); ONNO, Stephane, 35760 SAINT GREGOIRE (FR); PELLETIER, Ghyslain, MONTREAL, H1X 3P2 (CA); PERIARD, Francois, MONTREAL, H3T IL7 (CA)
(74) Representative: Vossius & Partner Patentanwälte Rechtsanwälte mbB

(57) **Abstract**

Methods and apparatus are provided to process rendering qualities for objects in an extended reality environment. The rendering quality of an object can be static or updated during the extended reality experience, either based on events and timing information. Object representations can be available locally in a device, such as user equipment or edge application server, or stored on a remote server. In an embodiment, requested object representations are stored on a remote server and graph-based and rendering quality information is used to configure a quality of service for delivery of the representations.

## Description

### TECHNICAL FIELD

At least one of the present embodiments generally relates to a graph-based method to handle rendering qualities.

### BACKGROUND

The general aspects described herein relate to approaches for handling rendering qualities, such as in an extended Reality environment.

### SUMMARY

At least one of the present embodiments generally relates to a method or an apparatus for a graph-based method to handle rendering qualities.

According to a first aspect, there is provided a method. The method comprises steps for initializing network entities; determining object rendering qualities of a network entity; determining a corresponding object representation of a graph; updating the graph at a node or component level with the object representation corresponding to the rendering quality; and, using the graph to indicate rendering qualities of an object to at least one of the network entities.

According to a second aspect, there is a method. The method comprises steps for initializing an object; determining or delegating node-level representation of an object; updating the node-level representation; determining a rendering quality at a component level; determining or delegating component representation of the object; and updating the component representation of the object.

According to another aspect, there is provided an apparatus. The apparatus comprises a processor and a memory. The processor can be configured to operate on digital video data according to the aforementioned methods.

According to another aspect, there is provided an apparatus. The apparatus comprises a processor and a memory. The processor can be configured to encode a block of a video or decode video data by executing any of the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

### BRIEF DESCRIPTION OF THE DRAWINGS

Figure 1 illustrates a node graph representation of an XR scene.
Figure 2 illustrates an architecture of MPEG-I scene description.
Figure 3 illustrates one example of the main steps of a rendering quality method under the described aspects.
Figure 4 illustrates rendering qualities defined only on a particular object element.
Figure 5 illustrates rendering quality granularity based on semantics defined at both node and component levels with the same evaluation criteria.
Figure 6 illustrates a merged threshold determination for the rendering quality granularity based on semantics defined at several component levels of the same node-level whole object representation.
Figure 7 illustrates rendering qualities defined at both node and component levels for only a specific object representation with the same evaluation criteria.
Figure 8 illustrates an example of determination of the rendering quality at node or component level.
Figure 9 illustrates one embodiment of a first method under the described aspects.
Figure 10 illustrates another embodiment of the steps of a rendering quality method of an object under the described aspects.
Figure 11 illustrates one embodiment of an apparatus under the described aspects.
Figure 12 illustrates a standard, generic, video compression scheme.
Figure 13 illustrates a standard, generic, video decompression scheme.
Figure 14 illustrates a processor-based system for encoding/decoding under the general described aspects.

### DETAILED DESCRIPTION

The embodiments described here provide a method to handle rendering qualities for any object of an extended Reality (XR) scene represented by a node graph. The rendering quality of an object may be static (i.e., determined once based for example on the rendering capabilities of the device) or may evolve during the XR experience based on some runtime criteria (e.g., proximity, visibility, network conditions ...), events and/or timing information.

An object corresponds to a virtual entity or a representation of a real entity (e.g., a scanned item of the user's real environment).

An object provides geometric and material data for proper rendering.

An object may contain timed media content such as video, audio and/or haptics data.

The rendering of an object could involve visual, audio or haptics renderers.

At least one of the methods described herein are composed of the main following steps: Initialization of the method, Determination of the rendering quality for each object of the XR scene, Determination of the object representation related to the rendering quality, and Updating the object representation in the node graph.

This method is able to handle object representations available locally in the device (User Equipment or Edge Application Server) or stored remotely in a server.

This method can advantageously be used by a Scene Manager (i.e., the functional entity of the device in charge of updating the XR scene before the rendering process) to optimize the resources of the device and the network during an XR experience while maintaining an acceptable Quality of Experience (QoE).

When requesting object representation(s) stored remotely in a server, this method provides graph-based and rendering quality information which may be used to configure the Quality of Service (QoS) for the delivery of the representations.

### Node Graph representation of an XR scene

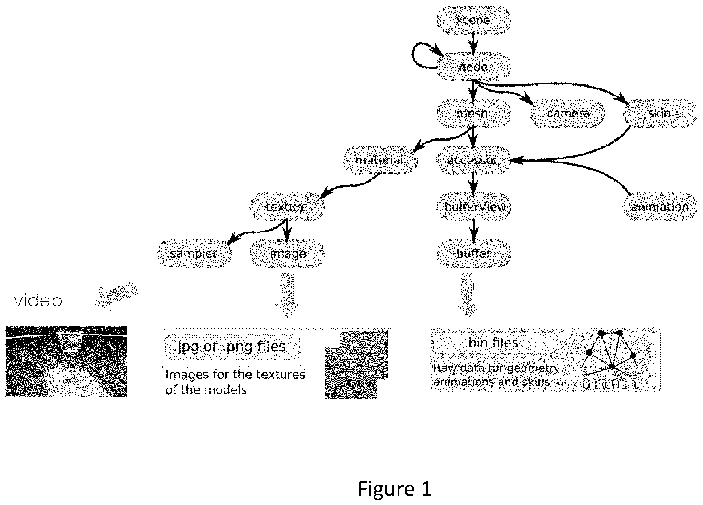

An XR scene can be represented by a node graph (Figure 1):
An object corresponds to a node (or a group of nodes) of the graph, each node providing spatial parameters (translation, rotation, scale) to place the object in the XR scene
The spatial relationships between the objects correspond to the connections between the nodes of the graph
This node can further contain several components (e.g., mesh, material, texture...) which provide the geometric and material data for the rendering of the object.

By using the node graph, an object has:
A node-level representation corresponding to the whole object representation (including all its component-level representations),
Several component-level representations related to geometric, material, texture data

### MPEG-I Scene Description

Based on this node graph representation, a scene description provides semantics for time-efficient update and rendering of the XR scene.

MPEG-I Part14 Scene Description is specifying a new scene description format for XR applications based on the Khronos glTF extension mechanism. The support of timed media and scene description update has been addressed in a first edition (for 2D video, spatial audio, scene description update) and a first amendment (for volumetric video) of the standard.

In a second amendment of the standard, the support of Augmented Reality (AR) anchoring, interactivity, avatar, haptics, and immersive audio is addressed.

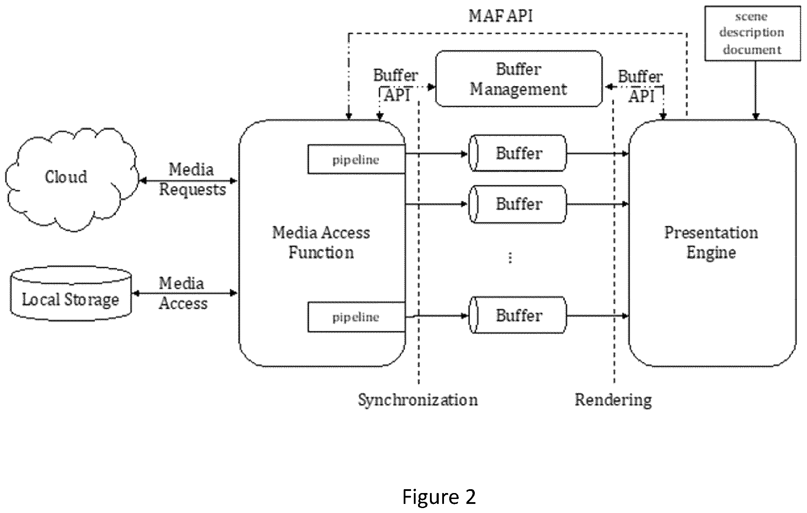

With respect to other scene description formats, MPEG-I Scene Description adds the support of the fetching of timed media through the definition of Media Access Function (MAF) and Buffer APIs (Figure 2).

The MAF is responsible for the media access, e.g., download, streaming or connecting to other peers, as well as for decryption, decoding and post-processing related functions. Based on the MAF API, the MAF constructs suitable media pipelines to transform the accessed compressed media from a delivery format into so-called buffer formats that can be directly rendered by the Presentation Engine through the buffer API.

The MAF API and the new MPEG glTF extension on scene description update are particularly of interest for managing the rendering quality of an object by a Presentation Engine.

### MAF API

The functions startFetching() and updateViewQ of the MAF API are particularly of interest for managing the rendering quality of a media by a Presentation Engine.

The startFetching() function is used to request the media pipeline to start fetching the data.

The updateViewQ function is used to update the current view information when the pose of the viewer or the object position has significantly changed to impact the media content

These two functions have a Viewlnfo input data structure defined as follows:

```
       Interface Viewinfo {
  attribute Pose pose;
  attribute Camera camera;
  attribute Transform objectTransform; };
```

Where pose corresponds to the viewer's pose expressed in the scene's coordinate system, *camera* provides the intrinsic properties of the camera, and *objectTransform* provides the position and orientation of the object as a 4x4 transformation matrix expressed in the scene's coordinate system.

This *ViewInfo* information may be used to control the rendering quality of the object based on the visibility of the object and/or its distance from the viewer.

### MPEG glTF extension on Scene Description update

The scene description and the related node graph can be updated at runtime using the new MPEG_scene_dynamic extension.

The MPEG_scene_dynamic extension points to MPEG_media extension element that contains an URL information to access scene document updates.

The scene updates are expressed as a scene description document or as a patch document using the JSON Patch protocol as defined in IETF RFC 6902.

This scene description update mechanism may be used to adapt the object representation according to the desired rendering quality, by modifying its related node(s) of the graph.

This update mechanism can be triggered by an event or by a timing information (wall clock, timestamp).

### Rendering Qualities specified by a Content Creator

A content creator may want to define the rendering qualities of an object at runtime. He may rely on the Levels-of-Detail (LoD) principle or may provide an information of the object importance.

### Rendering Quality based on Levels-of-Detail (LoD)

A typical control of the rendering quality for an object relies on the definition of a set of object representations (i.e., a set of levels-of-details). At runtime, the current object representation is selected based on a criteria such as the distance from the viewer, the object screen coverage (i.e., the percentage of the screen covered by the object) and the corresponding thresholds.

Microsoft has provided a vendor extension MSFT_lod to the Khronos glTF format to select the current object representation from a set of representations based on the screen coverage criteria.

In the example below, the selected object representation for the rendering corresponds to:
the "High_LOD" node for a screen coverage from 1.0 to 0.5,
the "Medium_LOD" node for a screen coverage from 0.5 to 0.2,
the "Low_LOD" node for a screen coverage from 0.2 to 0.01,
nothing below 0.01, i.e., no object rendering.

| |
|---|
| ```
 "nodes": [
  {
    "name": "High_LOD",
    "mesh": 0,
    "extensions": {
      "MSFT_Iod": {
        "ids": [
          1,
          2
        ] }
    },
    "extras": {
      "MSFT_screencoverage": [
        0.5,
        0.2,
        0.01
      ]
    }
  },
  {
    "name": "Medium_LOD",
    "mesh": 1
  },
  {
    "name": "Low_LOD",
    "mesh": 2
  }
 ]
``` |

### Rendering Quality based on object importance

A content creator may want to distinguish some key objects which need to be rendered with higher quality than the other objects.

For example, for an advertising use case, a car having some reflective and/or glossy materials needs to be rendered with higher quality than the other objects of the scene (building, trees...).

A prior method provides a method to control the hybrid raytracing rendering process to achieve real-time constraints based on a prior object classification on rendering importance as follows:
An integer value of 1 is assigned to objects of low importance.
An integer value of 2 is assigned to objects of high importance.
An integer value of 3 is assigned to objects whose importance may vary during the XR experience (e.g., for objects which become closer to the main camera or to a reflective object).

The MPEG-I Scene Description provides the capability to control the rendering quality of object based on the combination of the updateView() MAF function (for the request of an object representation) and the MPEG_scene_dynamic glTF extension (for the delivery of the object representation). But it only relies on implicit criteria based on distance/visibility from the viewer and does not provide the thresholds and the corresponding object representations.

The Microsoft glTF LoD extension and a prior work are limited to objects having their representations embedded into a node graph (e.g., in buffers storing the mesh geometries) and loaded in the memory of the device. There is also a lack of criteria and corresponding thresholds to handle the time-evolving network conditions (e.g., impact on data rates, latencies, jitter) due to potential traffic congestion and/or packet losses for adjusting the rendering quality of the object representations stored remotely.

For objects having their representations stored remotely (e.g., in an Application Server) or stored locally in the device, there is a lack of method to request the object representation corresponding to the desired rendering quality, by exposing the content creator's intent to the MAF/network.

There is also a lack of method to expose graph-based information to the MAF/network. This graph-based information may be used to configure the Quality of Service (QoS) for the delivery of the object representations.

The present aspects are detailed in the scope of MPEG-I Scene Description.

This present aspects can be used for other scene or media description formats.

The access to the media/network is detailed in the scope of the MAF API defined in MPEG-I Scene Description. Other media/network access APIs may advantageously be adapted to support the present aspects.

The present aspects provide a method to handle rendering qualities for any object of an extended Reality (XR) scene represented by a node graph.

The rendering quality of an object may be static (i.e., determined once based for example on the rendering capabilities of the device) or may evolve during the XR experience based on some dynamic criteria (proximity, visibility, network conditions ...), events and/or timing information.

This method is able to handle object representations available locally in the device (User Equipment or Edge Application Server) or stored remotely in a server.

This method can advantageously be used by a Scene Manager (i.e., the functional entity of the device in charge of updating the XR scene before the rendering process) to optimize the resources of the device and the network during an XR experience while maintaining an acceptable Quality of Experience (QoE).

For example, the optimized resources may correspond to the device memory consumption, CPU/GPU processing power, energy consumption, network bandwidth.

When requesting object representation(s) stored remotely in a server, this method provides graph-based and rendering quality information which may be used to configure the Quality of Service (QoS) for the delivery of the representations.

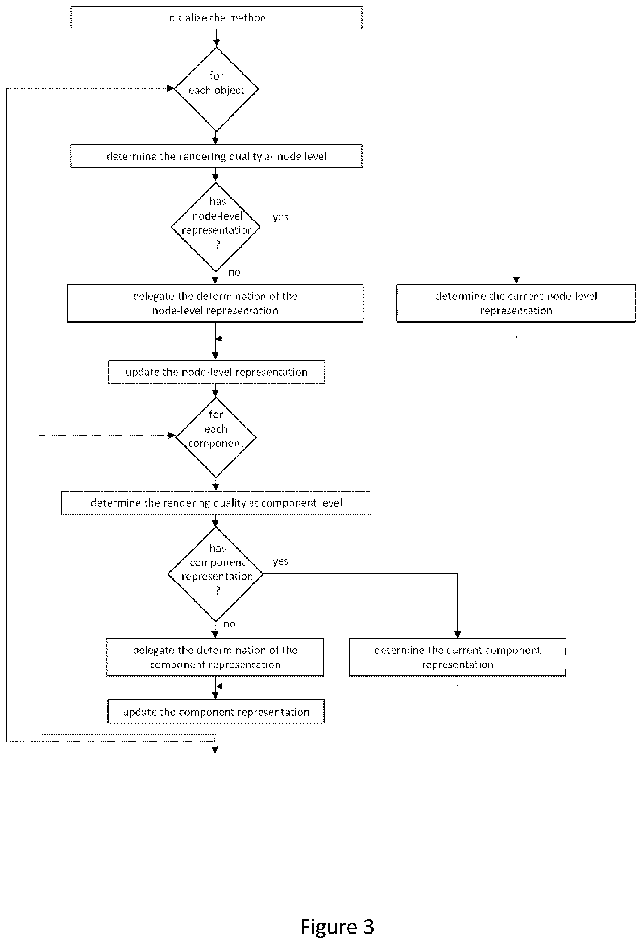

The processing model of the present aspects are provided in Figure 3.

The main steps are the following:
Initialization of the method, determination of the object rendering quality at node and/or component level of the graph, determination of the corresponding object representation at node and/or component level of the graph. This determination can be delegated if the object representation is not available locally in the device, Updating the graph at node and/or component level with the object representation corresponding to the rendering quality.

### Initialization

The method is initialized once, typically during a configuration/negotiation phase between the involved network entities (e.g., User Equipment, Application Server, Edge Application Server) of the XR experience.

The Scene Manager of the device (User Equipment or Edge Application Server) needs to receive the potential rendering qualities of an object and to receive instructions of how to update the node graph by selecting among the object's rendering qualities.

A content creator may use a XR scene description (e.g., MPEG-I Scene Description) to provide the semantics to be used at runtime by the Scene Manager to determine the rendering quality of an object.

This semantics may be related to the rendering quality of the whole object (i.e., attached to a node or a group of nodes of the graph) and/or to the rendering quality of particular element(s) of the object (i.e., attached to component(s) of the node).

### Semantics for the rendering quality of the whole object

A content creator may want to define the rendering quality at the granularity of a whole object (i.e., each level of rendering quality defines the whole object, including the geometric and material data).

For this purpose, the semantics may be provided at the node level of the graph. Table 1 provides some examples of semantics to handle the rendering qualities for a whole object.

**Table 1: some examples of semantics to handle the rendering qualities for a whole object.**

| **Parameter** | **Parameter value** | **Additional information** | **Comment** |
|---|---|---|---|
| Evaluation occurrences | Array of occurrences | | Each element of the array corresponds to one of the evaluation occurrences defined below (ONCE, EACH_FRAME, N_FRAME, TIMED_BASED, EVENT_BASED). |
| | | | The logical combination between these occurrences is defined in the evaluation occurrences combination parameter. |
| | ONCE | | The rendering quality of this object needs to be evaluated once (e.g., based on the rendering capabilities of the device) |
| | EACH_FRAME | | The rendering quality of this object needs to be evaluated at each rendering frame. |
| | N_FRAME | To provide the value of N (e.g., N=3, 4) | The rendering quality of this object needs to be evaluated every N rendering frames. |
| | TIME_BASED | Additional information on the times when the evaluation occurs (e.g., at a given delay(s) after the application starts, between a time interval) and the time reference (e.g., wall clock time, system time) in which the times are expressed. | The rendering quality of this object needs to be evaluated at given times. |
| | EVENT_BASED | Additional information on the type(s) of trigger whose activation sends the event (e.g., proximity trigger related to the device localization, battery life crossing a threshold) | The rendering quality of this object needs to be evaluated at given event(s). |
| Evaluation occurrences combination | String | A '#' indicates the occurrence index, '&' indicates a logical AND operation, 'I' a logical OR operation and '∼' a NOT operation. Parenthesis are used to group some operations. Such a syntax may give the following string: "#1&~#2\|(#3&#4)". An empty string is understood as a logical OR between all the occurrences. | A set of logical operations to apply to the evaluation occurrences. |
| Rendering quality levels | LOW, MEDIUM, HIGH or array of numbers/identifiers | | Array of levels. Each level is associated to an object representation referenced in the object representations array. Each level may be associated to a minimum and maximum threshold values referenced in the threshold array. If a single level is provided, it corresponds to an initial rendering quality level which may be modified by an event (i.e., using an EVENT_BASED evaluation criteria). |
| Evaluation criteria | DISTANCE_BASED | | Distance of the object from the viewer's position. To be compared to the values provided in the thresholds array. May be expressed in meter. |
| | VISIBILITY_BASED | | Visibility of the object from the viewer's position. To be compared to the values provided in the thresholds array. May be expressed in percentage of screen coverage. |
| | EVENT_BASED | Additional information on the type(s) of trigger whose activation sends the event (e.g., user input, collision detection between two objects). Some logical operations (e.g., AND, OR), or other Boolean functions/combination s may be defined if several triggers are defined. | May be associated to an action (e.g., setRenderingQuality( )) which sets the new rendering quality level for that object. |
| | TIME_BASED | Additional information on the time reference (e.g., wall clock time, system time) in which the thresholds are expressed. | Evolving object rendering quality based on pre-defined time values provided in the thresholds array. |
| | NETWORK_CONDITIONS_BASE D | Additional information on the type(s) of network conditions (e.g., data rate, delay/latency, jitter) associated to the thresholds array. | May contain an array of network condition types. There is a dedicated thresholds array for each type of network condition. |
| | DEVICE_CAPABILITIES_BASED | Additional information on the type(s) of device capabilities (e.g., CPU/GPU processing power, memory size, display parameters) associated to the thresholds array. | May contain an array of device capability types. There is a dedicated thresholds array for each type of device capability. |
| | PROCESSING_DELAYS_BASED | Additional information on the type(s) of the processing (e.g., physics simulation, scene update, rendering) associated to the thresholds array. | May contain an array of processing delays. There is a dedicated thresholds array for each type of processing. |
| Thresholds | Array of numbers | | Not provided for static or for event-based rendering qualities. There is a dedicated thresholds array for each type of evaluation criteria. |
| | | | The size of the array may be the same as the size of the rendering quality levels array. |
| Whole object representation s | Array of pointers/references to the whole object representations (e.g., numbers, url/uri/urn) | Additional information on where the whole object representations are stored (e.g., in the nodes array of a glTF file, the address of a server) | Array of pointers/references to the whole object representations. The size of the array is the same as the size of the rendering quality levels array. |

| | | | |
|---|---|---|---|
| *Note 1: the evaluation occurrence, rendering quality levels, evaluation criteria and thresholds information may also be mutualized (e.g., of the scene level) to be related to a group of objects, or to all the objects of a XR scene instead to be specific to a single object.* | | | |

### Semantics of the rendering quality of a particular object element

A content creator may want to define some rendering qualities for one or several elements (e.g., geometry, material) of the object.

For this purpose, the semantics may be provided at the corresponding component level of the graph node.

The rendering quality of a particular element of an object may be provided without the definition of the rendering qualities of the whole object.

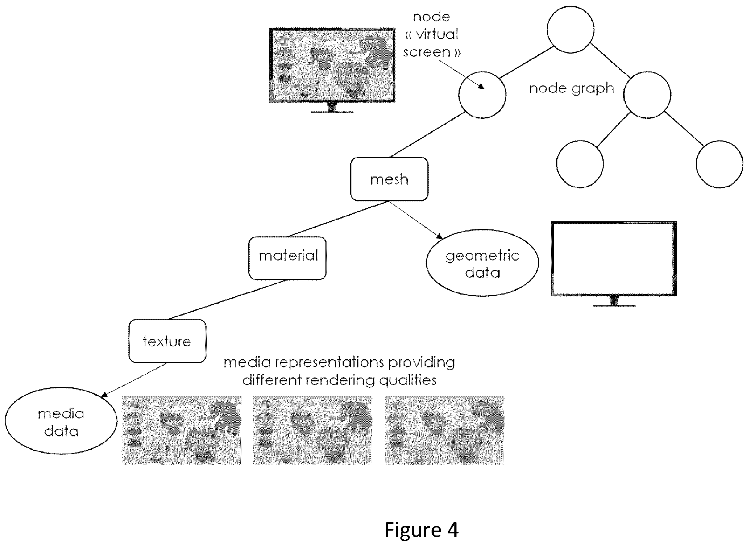

An example is the display of a media (e.g., video) stream on a virtual screen (Figure 4), where the graph node corresponds to the virtual screen, the mesh component contains the geometry of the screen which has a single representation (i.e., no need to define several rendering qualities for the geometry), and the mesh component also refers to a material/texture component containing the media stream. This texture component may have several representations (i.e., encoded streams) to be selected based on some rendering quality criteria (e.g., based on the distance from the viewer's).

As an alternative, the rendering quality of particular element(s) of an object may be provided in addition to the definition of the rendering qualities of the whole object to allow a combination of dedicated evaluation occurrence, evaluation criteria, thresholds for the rendering of the object and its elements (e.g., rendering qualities may be defined for the whole object based on the distance from the viewer's position while element(s) of the object may have dedicated rendering qualities based on event or network conditions), and a finer rendering granularity if the same evaluation criteria is defined for both the whole object and the particular element(s).

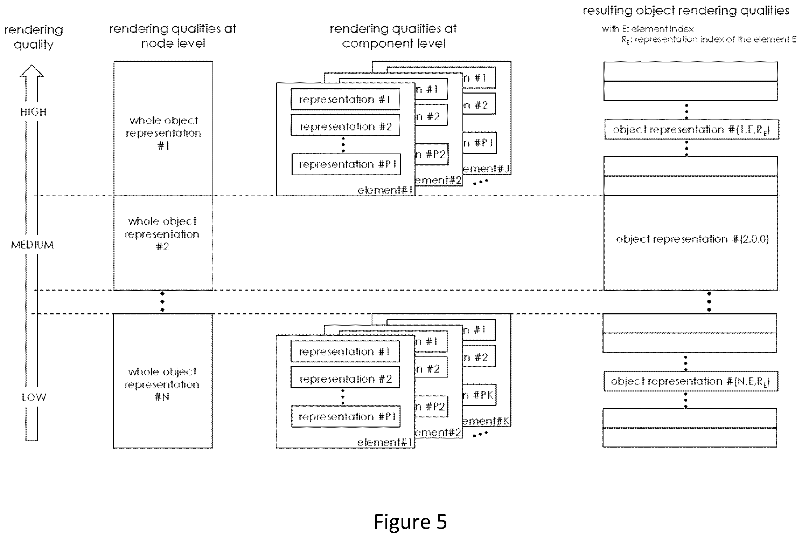

In the case of the same evaluation criteria for both the whole object and its element(s), this finer rendering granularity may be provided for each whole object representation or for only some of them (Figure 5).

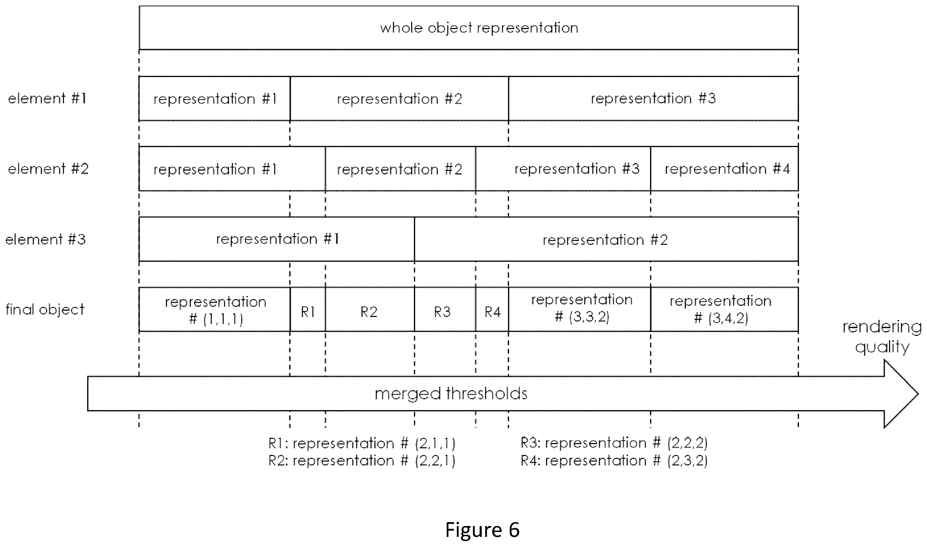

As shown in Figure 5 for the whole object representations #1 and #N, several elements may have dedicated representations for the same whole object representation. These element representations may have dedicated thresholds. In that case, the method needs to determine a merged threshold array which corresponds to the resulting object rendering qualities having a finer rendering granularity (Figure 6).

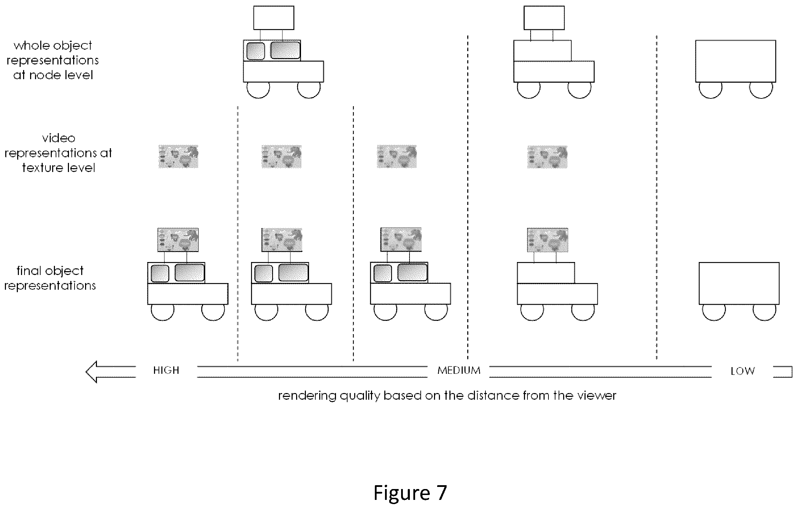

An example of having the same evaluation criteria for both the whole object and its element(s) is the display of a media (e.g., video) stream on a virtual advertising car (Figure 7), where: at node level: the advertising car has several representations based on the proximity of the viewer's (e.g. from a simplified geometry without a video display when the distance from the viewer is large, to a more detailed geometry with a video display when the distance becomes shorter), and at material/texture component level: several levels of rendering qualities for the video stream are defined for only a single node-level object representation corresponding to the shortest range of distance from the viewer's position.

The semantics for the control of the rendering qualities for a particular element of an object may be quite similar to those defined for the rendering of the whole object (Table 1).

The evaluation occurrence, rendering quality levels, evaluation criteria and thresholds information may also be mutualized (e.g., at the scene level) to be related to a group of components, or to all the components of a XR scene instead to be specific to a single component.

In other words, a 'rendering quality profile' structure could be defined at the scene level. Components could refer to a specific entry in the rendering quality profile or, alternatively, define their own rendering quality attributes. The ability to refer to an entry in the rendering quality profile may help minimize the amount of information needed to define rendering qualities at the component level.

In another embodiment, the semantics of all the components of a node may be mutualized at the node level. If this node also contains semantics for the whole object, all these node-level and component-level semantics may be merged into a single semantic. This merged approach may be used when a same evaluation criteria is used.

As an alternative, the semantics for the control of the rendering qualities for a particular element of an object may be specific to how/where this element is encoded and/or stored and how this element is received by the device (i.e., which transport protocol and associated signaling).

In that case, these semantics (or a part of these semantics) may not be provided in a scene description file associated with the node graph but in a separate/dedicated file received by the device during a negotiation/initialization phase when joining the XR session.

For example, different element representations for a video stream may be provided in a separate Media Description Presentation (MPD) file when streamed using the MPEG-DASH protocol.

### Determination of the Rendering Quality at Node or Component Level

For each evaluation occurrence defined during the initialization step or defined in the scene description, the Scene Manager determines the rendering quality of an object based on the semantics provided at the node and component levels of the graph (Table 1).

As shown in Figure 3, the Scene Manager needs to determine the rendering quality and the related object representation at node level before the determination at the component level.

The main reason is that an element representation may become obsolete/ not applicable with a newly-defined node-level representation. An illustration is provided in Figure 7 where no video display component is defined for the node-level representation of the advertising car having a simplified geometry when the distance from the viewer is large.

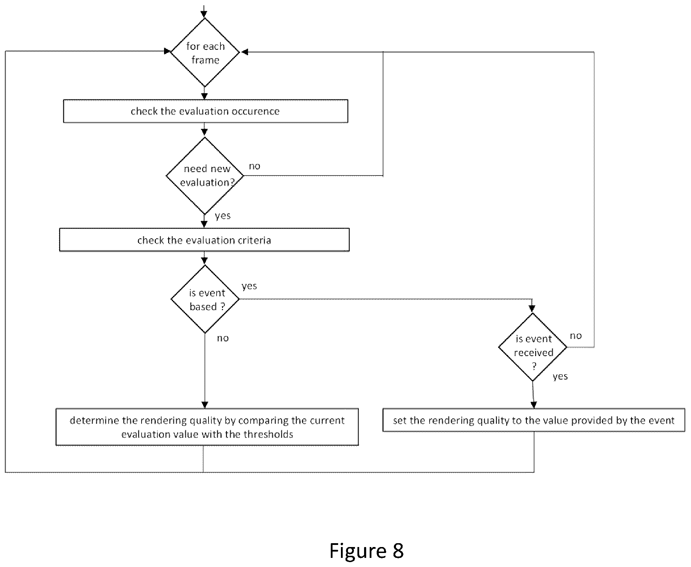

As illustrated in Figure 8, the Scene Manager checks if a new evaluation of the rendering quality is needed based on the evaluation occurrence information. If a new evaluation is required, the Scene Manager uses the evaluation criteria information to determine the rendering quality.

For event-based criteria, the Scene Manager may rely on the interactivity framework defined in the scene description to determine the rendering quality level corresponding to the activation of the trigger(s). For example, a new action (e.g., setRenderingQualityQ) may be added to the MPEG_node_interactivity glTF extension to define which rendering quality to set when the related triggers are activated (i.e., when the event is received).

For the other evaluation criteria, the Scene Manager compares the current evaluation value with the related thresholds to determine the rendering quality.

Once the rendering quality level is known, the related representation is determined and the node graph is updated accordingly.

### Determination of the Node Level or Component Level Representation

An object representation may be composed of a node-level representation and/or one or several component representations.

The semantics of the preceding paragraphs provide the relationship between a given rendering quality level and the corresponding node-level or component-level representation.

For example, it may be a 1:1 relationship between the array storing the rendering quality levels and the array storing the references to the node-level or component-level representation (i.e., same number of elements and the elements are ordered in a consistent manner between the two arrays).

Therefore, based on the knowledge of the rendering quality level, the Scene Manager can directly access to the reference of the corresponding node-level or component-level representation.

The node-level or component-level representations may be available locally in the device or stored remotely in a server.

### Determination of the node level or component level representation available locally in the device

This is typically the case when the node-level or component-level representations are embedded in the scene description file.

In that case, the Scene Manager can directly retrieve the current node-level or component-level representation by using the references provided in the whole object and element representations arrays of Table 1.

For example, the reference to the node-level representation may be an index to the nodes array defined at the top-level of a glTF file. And, the reference to a texture component representation may be an index to the textures array defined at the top-level of a glTF file.

### Remote determination of the node level or component level representation

If the node-level or component-level representations are stored remotely in a server, the device needs to request the node-level or component-level representation related to the determined rendering quality through a network-access API such as the MAF API of the MPEG-I Scene Description.

It is assumed that the device has already the basic information to establish an uplink connection (for the request of the node-level or component-level representation) and a downlink connection (for the delivery of the node-level or component-level representation) to a server (e.g., server IP address, port number).

A device may request several node-level or component-level representations at the same time corresponding to the update of several whole objects of the XR scene, or correspond to several component-level representations for the same object.

The following additional information may be provided when requesting a node-level or component-level representation through a network-access API:
1) A timing information indicating when the request is sent by the device. This information may be used by the server to prioritize the delivery of the node-level or component-level representations (e.g., to prioritize the oldest request) and/or may be used by the device to calculate some Quality-of-Experience (QoE) metrics such as the round-trip delay between the request and the reception (and/or the display) of the node-level or component-level representation. For example, the timing information may be either expressed in the system time clock of the device, or in NTP timestamp, or in Wall-Clock time.
2) A representation type information indicating which type of representation is requested (e.g., related to a whole object, a mesh element, a video, audio, or haptic media element). This information may be used by the server to determine which type of protocol and/or flow to configure for the delivery of the representation (e.g., a JSON Patch protocol in a dedicated WebRTC data channel flow for the delivery of a whole object representation, a RTP flow for the delivery of media-related element representation, a dedicated WebRTC data channel flow for the delivery of mesh/geometry element representation). This information may also be used to prioritize the delivery of the related representation (e.g., the delivery of a whole object representation may have a higher priority than the delivery of an element representation). For example, this representation type information may be an enumerator (e.g., WHOLE_OBJECT, OBJECT_ELEMENT_MESH, OBJECT_ELEMENT_MEDIA)
3) A key-type information (e.g., unique ID) to be used by the server hosting the node-level or component-level representations to select the representation based on the rendering quality level. This information may be exchanged during the configuration/negotiation phase between the involved network entities (e.g., User Equipment, Application Server, Edge Application Server) of the XR experience. For example, the key-type information may directly be the index of the current rendering quality level if the server relies on the same whole object or element representations array as the device
4) A rendering quality information-This information may be used to assign a priority to the network flow delivering the node-level or component-level representation (e.g., by assigning a high flow priority if the rendering quality level is high). For example, the rendering quality information may be an enumerator (e.g., LOW_RENDERING_QUALlTY, MEDIUM_RENDERING_QUALITY, HIGH_RENDERING_QUALITY)
5) A spatial dependency (i.e., a proximity and/or visibility) information between some node-level or component-level representations or between a node-level or component-level representation and the viewer's position.This information may be used to group or to introduce a timing constraint on the delivery of the node-level or component-level representations being in the same area, or to prioritize the delivery of node-level or component-level representations being close to the viewer. For example, the spatial dependency information may contain either: the 3D positions of the representations and the viewer expressed in a common space coordinates, or the relative distance between each pair of representations, and/or between each representation and the viewer, or an enumerator (e.g., CLOSE, FAR) associated to each pair of representations, and/or between each representation and the viewer, or a unique identifier to a spatial cluster associated to each representation. In that case, a set of spatial clusters grouping close representations has previously been created
6) A component dependency information for the component-level representations belonging to the same node-level representation (e.g., an object having multiple media streams or having different representations for both material and geometric elements). This information may be used to group or to introduce a timing constraint on the delivery of the component-level representations belonging to the same node-level representation. For example, the component dependency information may be a unique identifier of the node-level representation.
7) A network condition information related to the threshold values of the NETWORK_CONDITIONS_BASED evaluation criteria of Table 1. It may contain: the expected data rate, the required round-trip latency; the uplink and/or downlink occurrence (e.g., periodicity). It can rely on the evaluation occurrence criteria of Table 1 as for each evaluation occurrence there is a probability that a new node-level or component-level representation is requested.

In another embodiment, the application exposes the information of Table 1 to the MAF API. In that case, the application delegates the determination of the rendering quality to the MAF. The MAF will then request the related node-level or component-level representation.

Once the server hosting the node-level or component-level representations receives the request of a representation, it selects the current node-level or component-level representation by using the provided representation type and key-type information, configures the downlink flow(s) by eventually grouping some representations based on the timing, representation type, rendering quality, spatial dependency and component dependency information, and sends the node-level or component-level representations to the device by adding some timing information (e.g., duplication of the timing information from the device, and/or addition of the time when the representation is sent).

For example, the server may establish WebRTC connections to the device for sending the node-level representations to update several whole objects of the XR scene by using the MPEG_scene_dynamic glTF extension with the JSON Patch protocol (e.g., by using the 'replace' operation) in a dedicated WebRTC data channel flow. It also sends some media (e.g., video) element representations using dedicated Real-Time Protocol (RTP) flows and sends some mesh/geometry element representations using dedicated WebRTC data channel flows.

### Updating the Object Representation

As shown in Figure 3, the Scene Manager updates the object representation in the node graph on the reception of a node-level representation, and a component-level representation.

### Updating the node level representation

The devices may receive one or several node-level representations to update the node graph at the same time.

The format of the node-level representation update may be the JSON Patch protocol (e.g., by using the 'replace' operation) as defined in the MPEG_scene_dynamic gITF extension.

These representations are fetched from a dedicated timed buffer using for example the Buffer API and the MPEG timed glTF extensions (e.g., MPEG_accessor_timed, MPEG_buffer_circular, MPEG_media) of MPEG-I Scene Description.

The Scene Manager updates the node graph based on the receive instruction and timing information (e.g., 'replace', 'remove', `add' JSON Patch protocol operation).

### Updating the component level representation

The devices may receive one or several component-level representations to update the node graph at the same time. These representations may be related to one or several node-level whole object representations.

For example, these component-level representations may correspond to media (e.g., video, audio, haptics) streams or mesh/geometry (e.g., mesh vertices) data.

These representations are fetched from a dedicated timed buffer using for example the Buffer API and the MPEG timed glTF extensions (e.g., MPEG_accessor_timed, MPEG_buffer_circular, MPEG_media) of MPEG-I Scene Description.

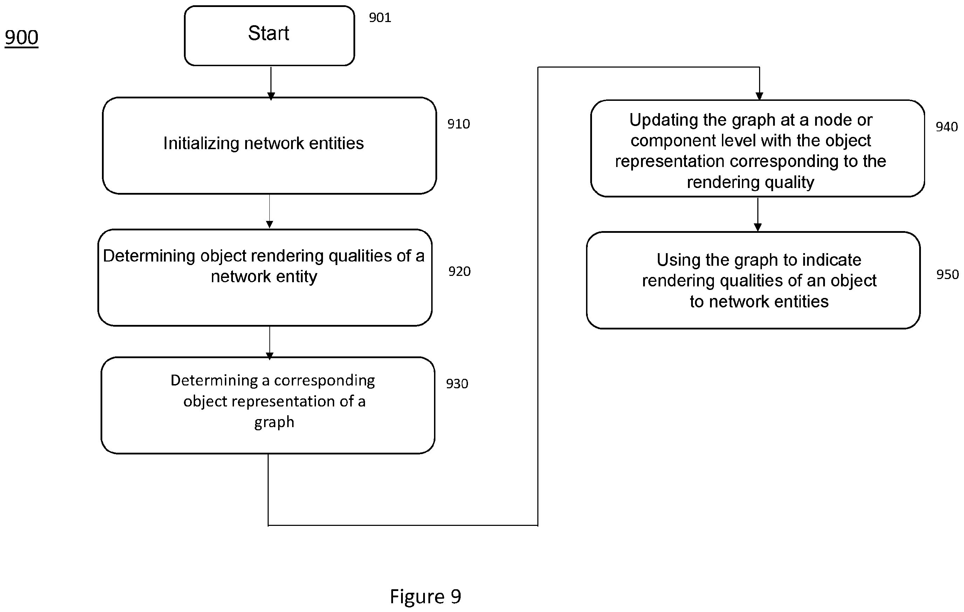

The Scene Manager updates the node graph based on the receive timing information. One embodiment of a method 900 under the general aspects described here is shown in Figure 9. The method commences at start block 901 and control proceeds to block 910 for initializing network entities. Control proceeds from block 910 to block 920 for determining object rendering qualities of a network entity. Control proceeds from block 920 to block 930 for determining a corresponding object representation of a graph. Control proceeds from block 930 to block 940 for updating the graph at a node or component level with the object representation corresponding to the rendering quality. Control proceeds from block 940 to block 950 for using the graph to indicate rendering qualities of an object to at least one of the network entities.

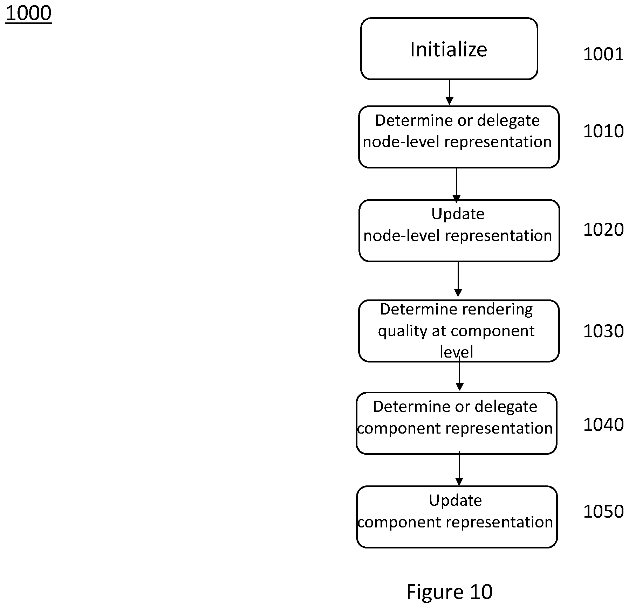

One embodiment of a method 1000 under the general aspects described here is shown in Figure 10, showing the main steps of rendering quality for an object. The method commences at initialize block 1001 and control proceeds to block 1010 for determining or delegating node-level representation of an object. Control proceeds from block 1010 to block 1020 for updating the node-level representation. Control proceeds from block 1020 to block 1030 for determining a rendering quality at a component level. Control proceeds from block 1030 to block 1040 for determining or delegating component representation of the object. Control proceeds from block 1040 to block 1050 for updating the component representation of the object.

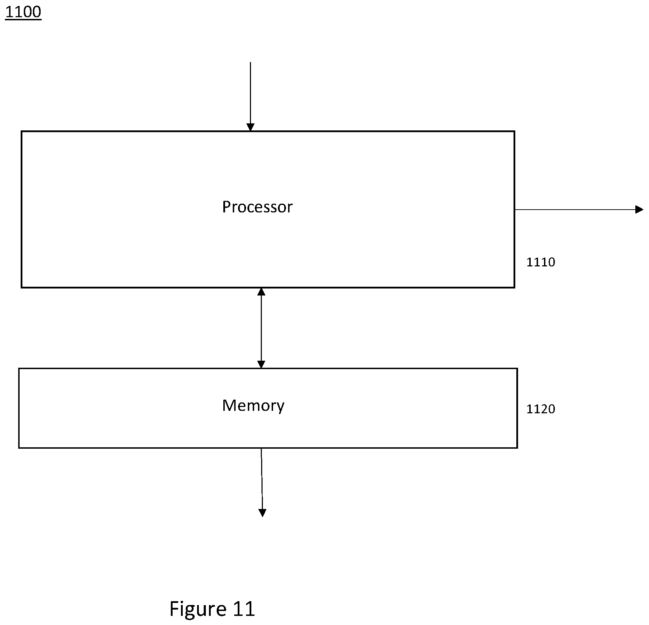

Figure 11 shows one embodiment of an apparatus 1100 for encoding, decoding, compressing or decompressing, or filtering of video data using the aforementioned methods. The apparatus comprises Processor 1110 and can be interconnected to a memory 1120 through at least one port. Both Processor 1110 and memory 1120 can also have one or more additional interconnections to external connections.

Processor 1110 is also configured to either insert or receive information in a bitstream and, either compressing, encoding, or decoding using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

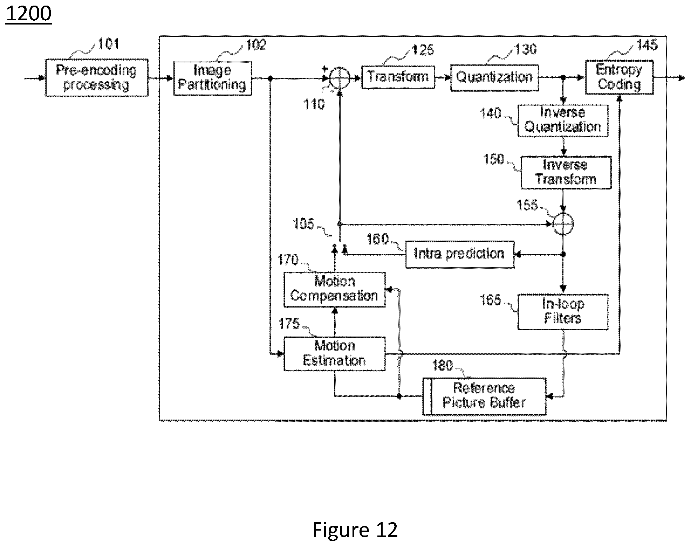

The aspects described and contemplated in this application can be implemented in many different forms. Figures 12, 13, and 14 provide some embodiments, but other embodiments are contemplated and the discussion of Figures 12, 13, and 14 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

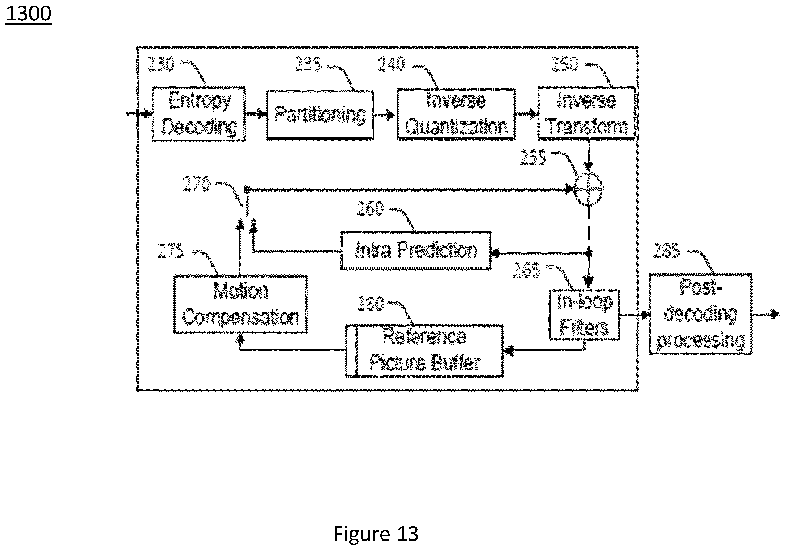

Various methods and other aspects described in this application can be used to modify modules, for example, the intra prediction, entropy coding, and/or decoding modules (160, 260, 145, 230), of a video encoder 100 and decoder 200 as shown in Figure 12 and Figure 13. Moreover, the present aspects are not limited to WC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application. The specific values are for example purposes and the aspects described are not limited to these specific values.

Figure 12 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 13 illustrates a block diagram of a video decoder 200. In the decoder 200, a bitstream is decoded by the decoder elements as described below. Video decoder 200 generally performs a decoding pass reciprocal to the encoding pass as described in Figure 12. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

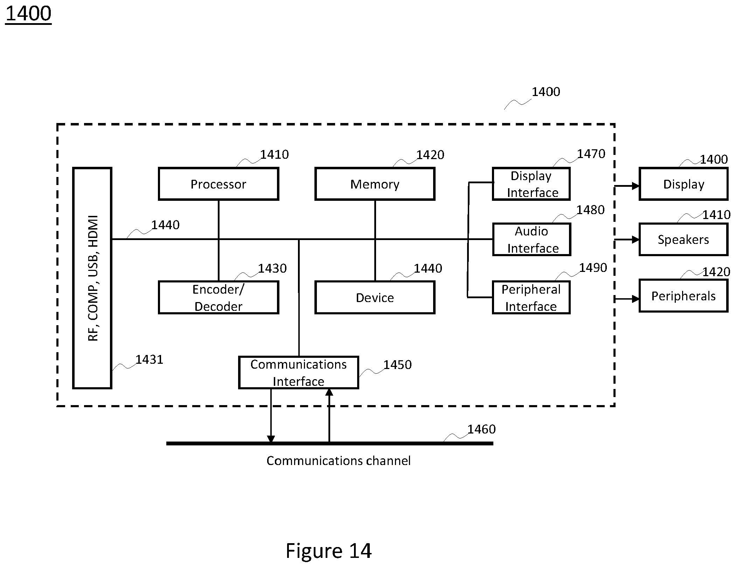

Figure 14 illustrates a block diagram of an example of a system in which various aspects and embodiments are implemented. System 1400 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1400, singly or in combination, can be embodied in a single integrated circuit (IC), multiple ICs, and/or discrete components. For example, in at least one embodiment, the processing and encoder/decoder elements of system 1400 are distributed across multiple ICs and/or discrete components. In various embodiments, the system 1400 is communicatively coupled to one or more other systems, or other electronic devices, via, for example, a communications bus or through dedicated input and/or output ports. In various embodiments, the system 1400 is configured to implement one or more of the aspects described in this document.

The system 1400 includes at least one processor 1410 configured to execute instructions loaded therein for implementing, for example, the various aspects described in this document. Processor 1410 can include embedded memory, input output interface, and various other circuitries as known in the art. The system 1400 includes at least one memory 1420 (e.g., a volatile memory device, and/or a non-volatile memory device). System 1400 includes a storage device 1440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1440 can include an internal storage device, an attached storage device (including detachable and non-detachable storage devices), and/or a network accessible storage device, as non-limiting examples.

System 1400 includes an encoder/decoder module 1430 configured, for example, to process data to provide an encoded video or decoded video, and the encoder/decoder module 1430 can include its own processor and memory. The encoder/decoder module 1430 represents module(s) that can be included in a device to perform the encoding and/or decoding functions. As is known, a device can include one or both of the encoding and decoding modules. Additionally, encoder/decoder module 1430 can be implemented as a separate element of system 1400 or can be incorporated within processor 1410 as a combination of hardware and software as known to those skilled in the art.

Program code to be loaded onto processor 1410 or encoder/decoder 1430 to perform the various aspects described in this document can be stored in storage device 1440 and subsequently loaded onto memory 1420 for execution by processor 1410. In accordance with various embodiments, one or more of processor 1410, memory 1420, storage device 1440, and encoder/decoder module 1430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1410 and/or the encoder/decoder module 1430 is used to store instructions and to provide working memory for processing that is needed during encoding or decoding. In other embodiments, however, a memory external to the processing device (for example, the processing device can be either the processor 1410 or the encoder/decoder module 1430) is used for one or more of these functions. The external memory can be the memory 1420 and/or the storage device 1440, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1400 can be provided through various input devices as indicated in block 1431. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 14, include composite video.

In various embodiments, the input devices of block 1431 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1400 to other electronic devices across USB and/or HDMI connections. It is to be understood that various aspects of input processing, for example, Reed-Solomon error correction, can be implemented, for example, within a separate input processing IC or within processor 1410 as necessary. Similarly, aspects of USB or HDMI interface processing can be implemented within separate interface Ics or within processor 1410 as necessary. The demodulated, error corrected, and demultiplexed stream is provided to various processing elements, including, for example, processor 1410, and encoder/decoder 1430 operating in combination with the memory and storage elements to process the datastream as necessary for presentation on an output device.

Various elements of system 1400 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1400 includes communication interface 1450 that enables communication with other devices via communication channel 1460. The communication interface 1450 can include, but is not limited to, a transceiver configured to transmit and to receive data over communication channel 1460. The communication interface 1450 can include, but is not limited to, a modem or network card and the communication channel 1460 can be implemented, for example, within a wired and/or a wireless medium.

Data is streamed, or otherwise provided, to the system 1400, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1460 and the communications interface 1450 which are adapted for Wi-Fi communications. The communications channel 1460 of these embodiments is typically connected to an access point or router that provides access to external networks including the Internet for allowing streaming applications and other over-the-top communications. Other embodiments provide streamed data to the system 1400 using a set-top box that delivers the data over the HDMI connection of the input block 1431. Still other embodiments provide streamed data to the system 1400 using the RF connection of the input block 1431. As indicated above, various embodiments provide data in a non-streaming manner. Additionally, various embodiments use wireless networks other than Wi-Fi, for example a cellular network or a Bluetooth network.

The system 1400 can provide an output signal to various output devices, including a display 1400, speakers 1410, and other peripheral devices 1420. The display 1400 of various embodiments includes one or more of, for example, a touchscreen display, an organic light-emitting diode (OLED) display, a curved display, and/or a foldable display. The display 1400 can be for a television, a tablet, a laptop, a cell phone (mobile phone), or another device. The display 1400 can also be integrated with other components (for example, as in a smart phone), or separate (for example, an external monitor for a laptop). The other peripheral devices 1420 include, in various examples of embodiments, one or more of a stand-alone digital video disc (or digital versatile disc) (DVR, for both terms), a disk player, a stereo system, and/or a lighting system. Various embodiments use one or more peripheral devices 1420 that provide a function based on the output of the system 1400. For example, a disk player performs the function of playing the output of the system 1400.

In various embodiments, control signals are communicated between the system 1400 and the display 1400, speakers 1410, or other peripheral devices 1420 using signaling such as AV.Link, Consumer Electronics Control (CEC), or other communications protocols that enable device-to-device control with or without user intervention. The output devices can be communicatively coupled to system 1400 via dedicated connections through respective interfaces 1470, 1480, and 1490. Alternatively, the output devices can be connected to system 1400 using the communications channel 1460 via the communications interface 1450. The display 1400 and speakers 1410 can be integrated in a single unit with the other components of system 1400 in an electronic device such as, for example, a television. In various embodiments, the display interface 1470 includes a display driver, such as, for example, a timing controller (T Con) chip.

The display 1400 and speaker 1410 can alternatively be separate from one or more of the other components, for example, if the RF portion of input 1431 is part of a separate set-top box. In various embodiments in which the display 1400 and speakers 1410 are external components, the output signal can be provided via dedicated output connections, including, for example, HDMI ports, USB ports, or COMP outputs.

The embodiments can be carried out by computer software implemented by the processor 1410 or by hardware, or by a combination of hardware and software. As a non-limiting example, the embodiments can be implemented by one or more integrated circuits. The memory 1420 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1410 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:
At least one embodiment handling rendering qualities for an object of an extended reality scene represented by a node graph.
At least one embodiment comprises the preceding embodiments further comprising conveying syntax to handle rendering qualities of an entire object.
At least one embodiment comprises any of the preceding embodiments further comprising updating an object representation, at a node level or a component level.
At least one embodiment comprises any encoding or decoding operation based on the above operations.
At least one embodiment comprises a bitstream or signal that includes one or more of the described syntax elements, or variations thereof.
At least one embodiment comprises a bitstream or signal that includes syntax conveying information generated according to any of the embodiments described.
At least one embodiment comprises creating and/or transmitting and/or receiving and/or decoding according to any of the embodiments described.
At least one embodiment comprises a method, process, apparatus, medium storing instructions, medium storing data, or signal according to any of the embodiments described.
At least one embodiment comprises inserting in the signaling syntax elements that enable the decoder to determine decoding information in a manner corresponding to that used by an encoder.
At least one embodiment comprises creating and/or transmitting and/or receiving and/or decoding a bitstream or signal that includes one or more of the described syntax elements, or variations thereof.
At least one embodiment comprises a TV, set-top box, cell phone, tablet, or other electronic device that performs transform method(s) according to any of the embodiments described.
At least one embodiment comprises a TV, set-top box, cell phone, tablet, or other electronic device that performs transform method(s) determination according to any of the embodiments described, and that displays (e.g., using a monitor, screen, or other type of display) a resulting image.
At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.
At least one embodiment comprises a TV, set-top box, cell phone, tablet, or other electronic device that receives (e.g., using an antenna) a signal over the air that includes an encoded image, and performs transform method(s).

## Claims

1. A method, comprising:
initializing network entities;
determining object rendering qualities of a network entity;
determining a corresponding object representation of a graph;
updating the graph at a node or component level with the object representation corresponding to the rendering quality; and,
using the graph to indicate rendering qualities of an object to at least one of the network entities.

2. An apparatus, comprising:
a memory and a processor, configured to:
initialize network entities;
determine object rendering qualities of a network entity;
determine a corresponding object representation of a graph; and,
update the graph at a node or component level with the object representation corresponding to the rendering quality; and,
use the graph to indicate rendering qualities of an object to at least one of the network entities.

3. The method of Claim 1 or the apparatus of Claim 2, wherein the method or the apparatus are used in an encoding process.

4. The method of Claim 1 or the apparatus of Claim 2, wherein the method or the apparatus are used in a decoding process.

5. The method of any one of Claims 1 or 3, or the apparatus of any one of Claims 2 or 4, wherein the object representation comprises a node level or a component level representation.

6. The method or the apparatus of Claim 5, wherein the object representation is embedded in a scene description file or is retrieved from a server.

7. The method of any one of Claims 1 or 3 through 6, or the apparatus of any one of Claims 2 or 4 through 6, wherein semantics correspond to a node level or a component level.

8. The method of any one of Claims 1 or 3 through 7, or the apparatus of any one of Claims 2 or 4 through 7, wherein rendering quality, evaluation criteria, and threshold information are related to a group of objects.

9. The method of any one of Claims 1 or 3 through 8, or the apparatus of any one of Claims 2 or 4 through 8, wherein a device requests one or more node-level or component-level representations at a same time corresponding to an update of one or more whole objects of a scene or correspond to one or more component-level representations for a same object.

10. The method of any one of Claims 1 or 3 through 9, or the apparatus of any one of Claims 2 or 4 through 9, wherein rendering quality of an element of an object is provided in addition to rendering qualities of an object in a combination of dedicated evaluation occurrence, evaluation criteria, thresholds for rendering of the object and its elements.

11. The method of any one of Claims 1 or 3 through 10, or the apparatus of any one of Claims 2 or 4 through 10, wherein an application delegates a determination of rendering quality to a media access function that request related node-level or component-level representations.

12. A device comprising:
an apparatus according to any one of Claims 2, 4, or 5 through 11; and
at least one of (i) an antenna configured to receive a signal, the signal including a video block, (ii) a band limiter configured to limit the received signal to a band of frequencies that includes the video block, and (iii) a display configured to display an output representative of the video block.

13. A non-transitory computer readable medium containing data content generated according to the method of any one of Claims 1, 3, or 5 through 11, for playback using a processor.

14. A non-transitory computer readable storage medium containing program code which, when the program is executed by a computer, cause the computer to carry out the method of any one of Claims 1, 3, or 5 through 11, for playback using a processor.

15. A computer program product comprising instructions which, when the program is executed by a computer, cause the computer to carry out the method of any one of Claims 1, 3, or 5 through 11.
